# EUROPÄISCHE PATENTSCHRIFT

(11) **EP 1 611 387 B1**
(45) Veröffentlichungstag und Bekanntmachung des Hinweises auf die Patenterteilung: **11.06.2008**
(21) Anmeldenummer: 04720656.0
(22) Anmeldetag: 15.03.2004
(51) Int. Cl.: F16L 17/04, F16L 21/06

(54) **ROHRKUPPLUNG**
PIPE COUPLING
RACCORD DE TUYAUX

(30) Priorität: 26.03.2003 CH 529032003
(43) Veröffentlichungstag der Anmeldung: 04.01.2006
(73) Patentinhaber: Straub Werke AG, 7323 Wangs (CH)
(72) Erfinder: SUDAR, Damir, CH-7310 Bad Ragaz (CH)
(74) Vertreter: Rosenich, Paul
(86) Internationale Anmeldenummer: PCT/IB2004/000739
(87) Internationale Veröffentlichungsnummer: WO 2004/085901

(56) Entgegenhaltungen:
- DE-A- 4 216 921
- FR-A- 2 576 388

## Beschreibung

Die Erfindung betrifft eine Rohrkupplung mit einem im wesentlichen zylindrischen, einen Längsschlitz und an beiden Stirnseiten radial nach innen gerichtete Seitenwände aufweisenden, mittels einer Spanneinrichtung im Durchmesser verengbaren, vorzugsweise aus metallischem Werkstoff bestehenden Gehäuse, mit einer den Längsschlitz überbrückenden Zunge und wenigstens einem darin angeordneten Dichtelement, vorzugsweise aus gummielastischem Werkstoff, wobei die Spanneinrichtung vorzugsweise aus an den Kanten des Längsschlitzes umgebogenen Laschen, sich an diesen abstützenden Bolzen und die Bolzen quer durchsetzenden Schrauben besteht und die Spanneinrichtung Abstützungen für die Seitenwände aufweist.

Rohrkupplungen dieser Bauart dienen zum Verbinden glattendiger Rohre und Armaturen. Je nach Konstruktion der Rohrkupplungen können diese für zugfeste oder nicht zugfeste Rohrverbindungen eingesetzt werden. Rohrkupplungen werden sowohl für Druckleitungen als auch für Vakuumleitungen verwendet.

Insbesondere bei Rohrkupplungen für zugfeste Rohrverbindungen besteht das Problem, dass die Seitenwände aufgrund der daran angreifenden Zugkräfte sowie auch des herrschenden Innendruckes in der Kupplung nach aussen gebogen werden und dies zu einem Ausfall der Rohrkupplung führt.

Eine Erhöhung der Wandstärke, um das sich nach aussen Biegen der Seitenwände zu verhindern, kommt in der Regel aus wirtschaftlichen und herstellungstechnischen Gründen nicht infrage, da der für das Gehäuse vorzugsweise verwendete Edelstahl einerseits sehr teuer und andererseits ab einer gewissen Wandstärke nur noch sehr beschränkt kalt verformbar ist.

Als Alternative zu dickeren Gehäusewandstärken ist eine Lösung bekannt (und stand während einiger Zeit auch im Verkaufsprogramm der Anmelderin), bei der die Bolzen der Spanneinrichtung in axialer Richtung über die Laschen hinaus verlängert und mit Querbohrungen versehen sind. In diese Querbohrungen wurden dann Zylinderstifte eingepresst, die einseitig über die Bolzen hinausragen. Die freien Enden dieser Zylinderstifte sind so angeordnet, dass sich Seitenwände daran abstützen können. Diese Konstruktion ist jedoch sehr aufwändig, erfordert zusätzlich Teile und Montagevorgänge und stellt ausserdem durch die überragenden Bolzen eine gewisse Verletzungsgefahr dar.

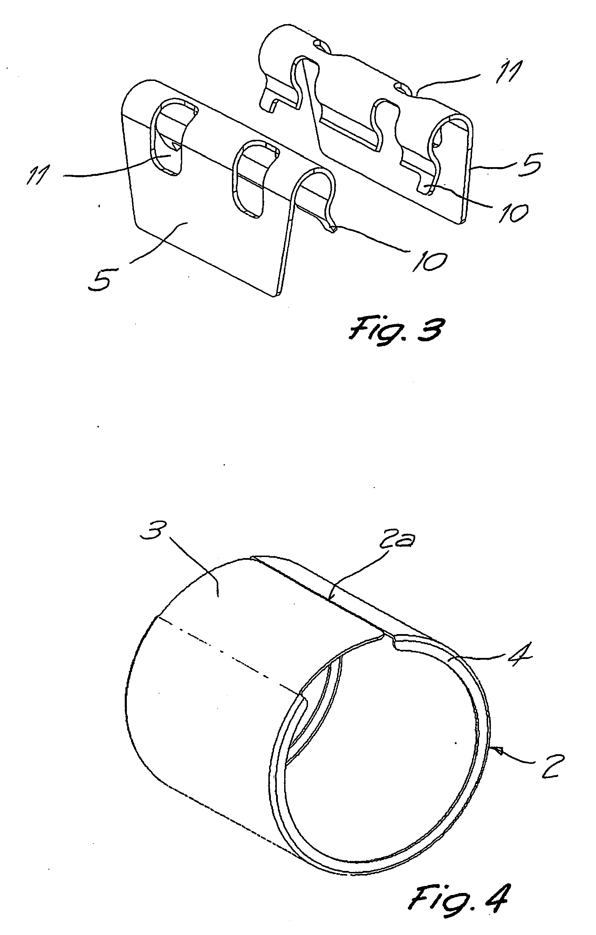

Aus der FR 2 756 388 A ist eine Rohrkupplung zum Verbinden von glattendigen Rohren bekannt, mit einem einen Längsschlitz aufweisenden Gehäuse aus profiliertem Bandmaterial und am Gehäuses angeordneten, mit dem Gehäuse verbundene Laschen zum Verspannen der Rohrkupplung. Die stirnsei-tigen Enden des Gehäuses sind etwa unter einem Winkel von 45° abgebogen und bilden nach innen gerichtete Seitenwände. An den Laschen sind Lappen angeformt. Die Lappen der einen Lasche dienen zum seitlichen Abschliessen des Längsschlitzes. Ausserdem bilden die Lappen lokale Abstützungen für die Seitenwände. Ein Aufbiegen der Seitenwände können diese Lappen jedoch kaum verhindern, da sie praktisch parallel zu den Seitenwänden verlaufen und somit durch den Innendruck zusammen mit diesen radial nach aussen aufgebogen werden. Insbesondere aus dem in Fig. 4 dargestellten Querschnitt geht jedoch klar hervor, dass es sich hier nicht um eine Kupplung für hohe Innendrücke, sondern um eine sog. Ablaufschelle", beispielsweise für Entwässerungen oder Meteorwasser-Leitungen handelt.

Der Erfindung liegt die Aufgabe zugrunde, eine Rohrkupplung zu schaffen, die ohne wesentlichen Mehraufwand eine seitliche Abstützung der Seitenwände des Gehäuses und dadurch höhere Betriebsdrücke ermöglicht.

Gemäss der Erfindung wird dies dadurch erreicht, dass die Abstützungen an den Laschen angeordnet oder ausgebildet sind. Durch die Anordnung, bzw. Ausbildung der Abstützung an den Laschen werden keine zusätzlichen Teile und Montageoperationen notwendig.

Eine zweckmässige Ausführung besteht darin, dass die Abstützungen als mit den Laschen einstückig verbundene Nocken, bzw. Vorsprünge ausgebildet sind. Solche Nocken oder Vorsprünge können bspw. durch Biege- oder Umformoperationen hergestellt werden.

Die Laschen überragen das Gehäuse vorteilhaft in axialer Richtung der Kupplung. Durch geeignete Formgebung der Laschen (beispielsweise gerundete oder angefaste Kanten) wird verhindert, dass dabei eine Verletzungsgefahr entsteht.

Die Abstützungen können zweckmässig als separate Elemente ausgebildet und mit den Laschen fest verbunden sein. Das Verbinden kann beispielsweise durch kleben, schweissen, nieten oder schrauben erfolgen.

Eine vorteilhafte Lösung besteht darin, dass die Laschen als separate Teile ausgebildet und mit dem Gehäuse fest verbunden sind. Durch die separate Herstellung der Laschen und des Gehäuses besteht die Möglichkeit, für diese Teile unterschiedliche Werkstoffe zu verwenden.

Die Anforderungen an die Laschen und an das Gehäuse sind sehr verschieden. Es ist daher zweckmässig, dass die Materialstärke des Gehäuses und der Laschen unterschiedlich ist. Durch die Abstützung der Seitenwände kann die Wandstärke des Gehäuses wesentlich dünner ausgelegt werden, als die Wandstärke der Laschen.

Durch entsprechende Formgebung der Abstützung an den Laschen ist es vorteilhaft auch möglich, dass die Laschen mit dem Gehäuse einstückig ausgebildet sind. Dadurch können die Arbeitsgänge für das Verbindender Laschen mit dem Gehäuse eingespart werden.

Eine zweckmässige Ausführung besteht darin, dass die Zunge mit dem Gehäuse einstückig ausgebildet ist. Die Zunge überbrückt den Gehäusespalt und verhindert somit, dass die Dichtmanschette infolge des Innendruckes nach aussen tritt. Die einstückige Ausbildung von Zunge und Gehäuse wird insbesondere auch durch die gegenüber den bekannten Rohrkupplungen geringere Wandstärke infolge der seitlichen Abstützung der Seitenwände ermöglicht. Diese Ausbildung betrifft eine Erfindung, die auch unabhängig von den übrigen Ansprüchen angewendet werden.

Vorteilhaft sind mehrere in axialer Richtung nebeneinander angeordnete, sich in Umfangsrichtung erstreckende Zungen vorgesehen. Die einzelnen Zungen können somit entsprechend den unterschiedlichen Funktionen dimensioniert und ausgelegt werden.

Die einzelnen Zungen werden zweckmässigerweise durch vorzugsweise V-förmige Einschnitte gebildet. Solche Einschnitte können beispielsweise gleichzeitig mit dem Herstellen der Rohplatine durch einen Stanzvorgang hergestellt werden.

Insbesondere für nicht zugfeste Rohrkupplungen ist es vorteilhaft, dass sich die Seitenwände wenigstens teilweise bis in den Bereich der Zunge erstrecken. Die Seitenwände können sich somit bei verspannter Rohrkupplung überlappen und das Gehäuse auch seitlich nahtlos abschliessen.

Beim Verspannen der Rohrkupplung greifen die Zungen in teleskopischer Art in die Gegenseite des Längsspaltes ein und überlappen den Mantel des Gehäuses. Damit das "Einfädeln" der Zungen ermöglicht wird, ist es zweckmässig, dass die äusseren Zungen in axialer Richtung verformbar sind.

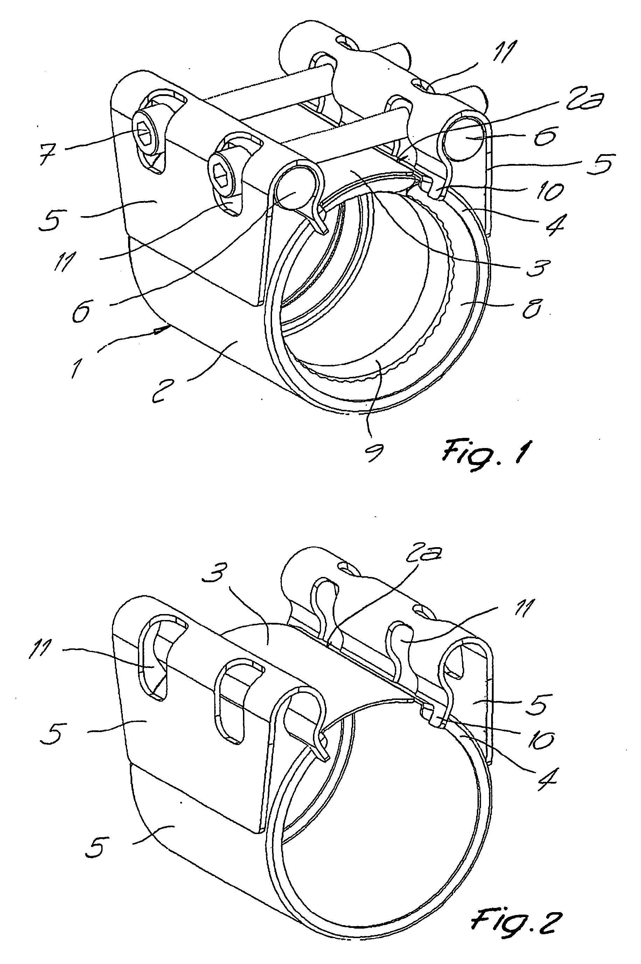

Die Bezugszeichenliste und die Fig. 1 bis Fig. 9 bilden, zusammen mit den in den Ansprüchen beschriebenen, beziehungsweise geschützten Gegenständen, integrierende Bestandteile der Offenbarung dieser Anmeldung. Die Figuren werden zusammenhängend und übergreifend beschrieben. Gleiche Bezugszeichen bedeuten gleiche Bauteile, Bezugszeichen mit unterschiedlichen Indizes geben funktionengleiche Bauteile an.

Die Erfindung soll nachstehend, anhand der sie beispielsweise wiedergebenden Zeichnungen näher erläutert werden. Es zeigen:
- Fig. 1: Eine erfindungsgemässe Rohrkupplung, in perspektivischer Ansicht;
- Fig. 2: das Gehäuse der Rohrkupplung gemäss Fig. 1 allein;
- Fig. 3: die als separate Teile hergestellten Laschen des Gehäuses gemäss Fig. 2;
- Fig. 4: den Mantel des Gehäuses gemäss Fig. 2;
- Fig. 5: eine Rohrkupplung gemäss dem Stand der Technik;
- Fig. 6: eine weitere Ausführung eines erfindungsgemässen Gehäuses;
- Fig. 7: das Gehäuse gemäss Fig. 6 mit eingelegtem Sattel;
- Fig. 8: eine weitere Ausführung eines erfindungsgemässen Gehäuses und
- Fig. 9: den Mantel des Gehäuses gemäss Fig. 8

Bei der aus Fig.1 bis 4 ersichtlichen Ausführung weist die Rohrkupplung ein insgesamt mit 1 bezeichnetes Gehäuse mit zylindrischem, einen Längsschlitz 2a aufweisenden Mantel 2 mit einer einstückig daran angeformten Zunge 3 und radial nach innen gerichteten Seitenwänden 4. auf. Als separate Teile hergestellte Laschen 5 sind vorzugsweise durch Schweissen mit dem Mantel 2 verbunden. Zylindrische Bolzen 6 sind in den Laschen 5 in axialer Richtung der Rohrkupplung angeordnet. Die Bolzen 6 werden quer dazu von Schrauben 7 durchsetzt. Die Laschen 5, die Bolzen 6 und die Schrauben 7 bilden zusammen eine Spanneinrichtung, mittels der das Gehäuse radial verengbar und auf den zu verbindenden Rohren festspannbar ist. In Gehäuse 1 sind Verankerungsringe 8 angeordnet, die beim Verspannen der Rohrkupplung mit der Aussenseite der zu verbindenden Rohre in Eingriff gelangen und dadurch eine zugfeste Verbindung ermöglichen. Im Gehäuse 1 ist ferner eine vorzugsweise aus gummielastischem Werkstoff bestehende Dichtmanschette 9 angeordnet. Die Laschen 5 überragen das Gehäuse in axialer Richtung und sind mit Vorsprüngen 10 versehen, an denen sich die Seitenwände 4 des Mantels 2 abstützen. Dadurch wird ein sich nach aussen Biegen der Seitenwände 4 im Bereich des Längsschlitzes 2a verhindert.

Fig.3 und 4 zeigen die als separate Teile hergestellten Laschen 5 und den Mantel 2. Durch die separate Herstellung können die Werkstoffe und die Wandstärken dieser Teile unabhängig voneinander optimal ausgelegt werden. Durch die axiale Abstützung der Seitenwände 4 an den Vorsprüngen 10 kann insbesondere die Wandstärke des Mantels 2 wesentlich geringer gewählt werden als bei den bisherigen Ausführungen, bei denen der Mantel 2 und die Laschen 5 einstückig ausgebildet sind.

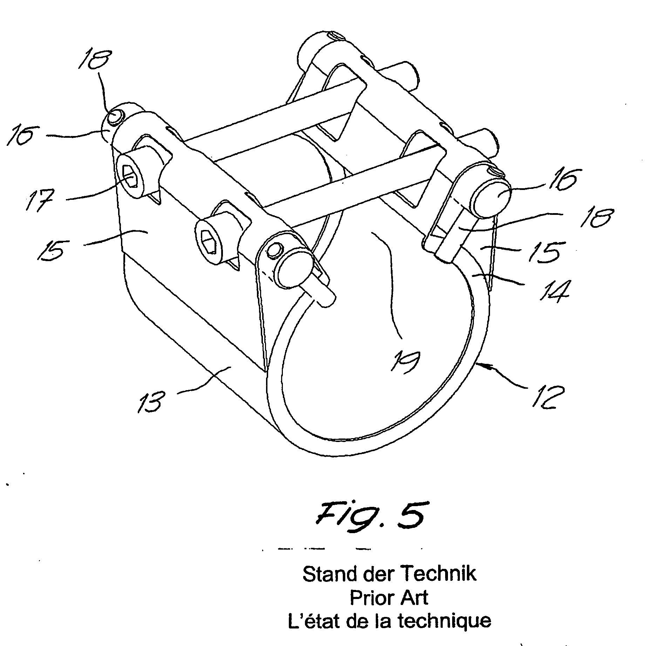

Fig.5 zeigt eine Rohrkupplung gemäss dem Stand der Technik. Diese weist ein insgesamt mit 12 bezeichnetes Gehäuse auf, das aus einem Mantel 13 mit einem Längsschlitz 19 und radial nach innen gerichteten Seitenwänden 14 sowie einstückig damit verbundene Laschen 15 besteht. Die Laschen 15 durchsetzende Bolzen 16 sind an beiden Enden über die Laschen 15 hinaus verlängert und mit Querbohrungen versehen, in welche Stifte 18 eingesetzt sind. Die Seitenwände 14 sind an den Stiften 18 in axialer Richtung abgestützt wodurch verhindert werden soll, dass diese bei Innendruckbelastung, bzw. axialer Zugbelastung der Rohrverbindung nach aussen gebogen werden. Schrauben 17 dienen ebenfalls zum Festspannen der Rohrkupplung auf den zu verbindenden Rohren.

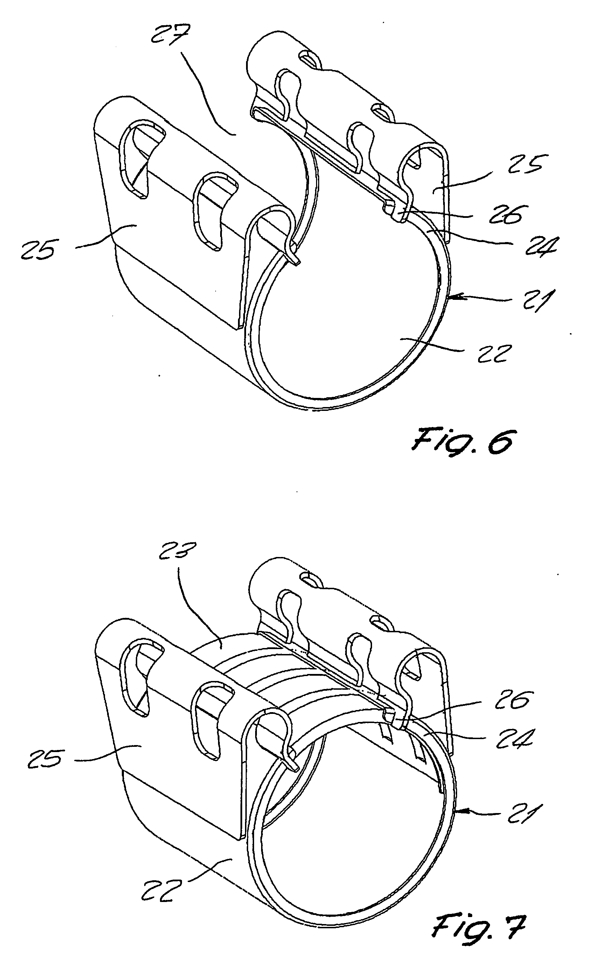

Aus Fig.6 und 7 ist eine weitere Ausführung ersichtlich mit einem Gehäuse 21, das aus einem einen Längsschlitz 27 aufweisenden Mantel 22 und einstückig daran angeformten Laschen 25 besteht. Der Längsschlitz 27 des Mantels 22 wird jedoch nicht durch eine am Mantel 22 angeformte Zunge, sondern durch einen als separates Teil hergestellten Sattel 23 überbrückt. Der Mantel 22 weist radial nach innen gerichtete Seitenwände 24 auf. Die Seitenwände 24 werden in Bereich des Längsschlitzes 27 durch Vorsprünge 26 an den Laschen 25 in axialer Richtung abgestützt.

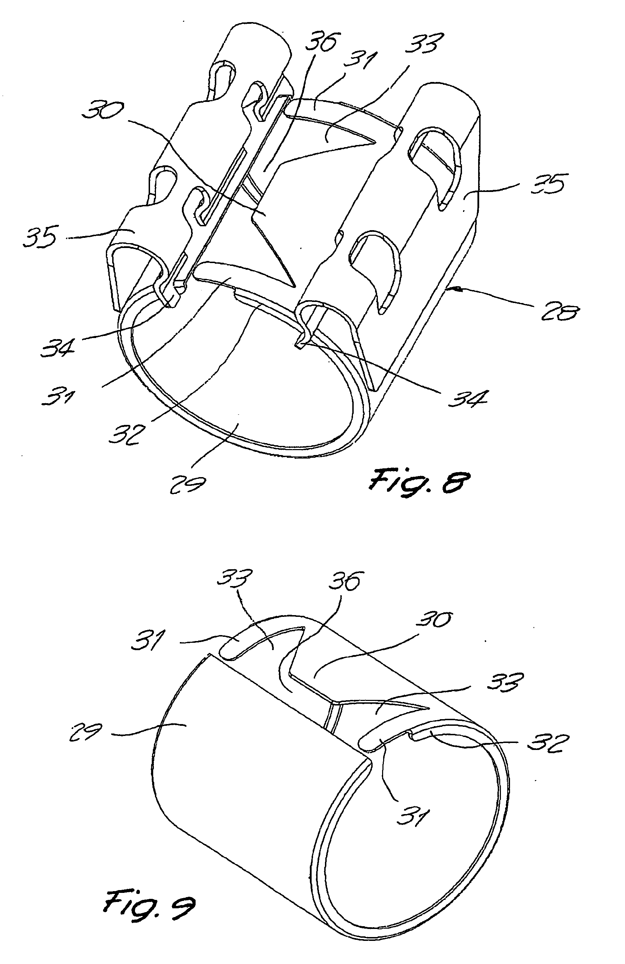

Fig.8 und 9 zeigen eine Ausführung mit einem insgesamt mit 28 bezeichneten Gehäuse, dass aus einem einen Längsschlitz 36 aufweisenden Mantel 29 mit angeformten Zungen 30 und 31 sowie radial nach innen gerichteten Seitenwänden 32 besteht. Laschen 35 sind bspw. durch schweissen mit dem Mantel 29 verbunden. Die Laschen 35 weisen Vorsprünge 34 zur Abstützung der Seitenwände 32 auf. Beim Verspannen des Gehäuses 28 untergreifen die Zungen 31 und später auch die Zunge 30 den gegenüberliegenden Rand des Längsschlitzes am Mantel 29. Die Zungen 30 und 31 werden durch V-förmige Einschnitte 33 gebildet. Dadurch sind die äusseren Zungen 31 in axialer Richtung begrenzt verformbar. Die Zungen 31 können somit in axialer Richtung gegen die zentrale Zunge 30 nach innen gebogen werden. Dadurch wird beim verspannen der Rohrkupplung die Seitenwand 32 im Bereich der Zunge 31 unter die gegenüberliegende Seitenwand 32a geschoben und somit ein komplettes Abschliessen des Mantels 29 für eine sich darin befindende Dichtmanschette ermöglicht. Die Laschen 35 weisen einstückig angeformte Vorsprünge 34 zur Abstützung der Seitenwände 32, 32a auf.

### Bezugszeichenliste

- 1: Gehäuse
- 2: Mantel
- 2a: Längsschlitz
- 3: Zunge
- 4: Seitenwand
- 5: Lasche
- 6: Bolzen
- 7: Schraube
- 8: Verankerungsring
- 9: Dichtmanschette
- 10: Vorsprung
- 11: Durchtrittsöffnung
- 12: Gehäuse
- 13: Mantel
- 14: Seitenwand
- 15: Lasche
- 16: Bolzen
- 17: Schraube
- 18: Stift
- 19: Längsschlitz

- 21: Gehäuse
- 22: Mantel
- 23: Sattel
- 24: Seitenwand
- 25: Lasche
- 26: Vorsprung
- 27: Längsschlitz
- 28: Gehäuse
- 29: Mantel
- 30: Zunge
- 31: Zunge
- 32, 32a: Seitenwand
- 33: Einschnitt
- 34: Vorsprung
- 35: Lasche
- 36: Längsschlitz

## Patentansprüche

1. Rohrkupplung mit einem im wesentlichen zylindrischen, einen Längsschlitz (2a,19, 27, 36) und an beiden Stirnseiten nach innen gerichtete Seitenwände (4, 24 32) aufweisenden, mittels einer Spanneinrichtung im Durchmesser verengbaren, vorzugsweise aus metallischem Werkstoff bestehenden Gehäuse (1, 21, 28), mit einer den Längsschlitz (2a,19, 27, 36) überbrückenden Zunge (3, 30, 31) und wenigstens einem darin angeordneten Dichtelement (9), vorzugsweise aus gummielastischem Werkstoff, wobei die Spanneinrichtung aus an den Kanten des Längsschlitzes (2a,19, 27, 36) umgebogenen Laschen (5, 25, 35), sich an diesen abstützenden Bolzen (6) und die Bolzen (6) quer durchsetzenden Schrauben (7) besteht und die Spanneinrichtung Abstützungen für die Seitenwände (4, 24, 32) aufweist, wobei die Abstützungen (10, 26, 34) an den Laschen (5, 25, 35) angeordnet oder ausgebildet sind, **dadurch gekennzeichnet, dass** die beiden Seitenwände (4, 24 32) radial nach innen gerichtet sind, die Laschen (5, 25, 35), bzw. die Abstützungen (10, 26, 34) das Gehäuse (1, 21, 28) in axialer Richtung der Kupplung überragen und die Abstützungen (10, 26, 34) als Vorsprünge (10, 26, 34) ausgebildet sind, an denen sich die Seitenwände (4, 24, 32) axial abstützen.

2. Rohrkupplung nach Anspruch 1, **dadurch gekennzeichnet, dass** die Abstützungen mit den Laschen (5, 35) einstückig verbunden sind.

3. Rohrkupplung nach einem der vorhergehenden Ansprüche, **dadurch gekennzeichnet, dass** die Abstützungen als separate Elemente (26) ausgebildet und mit den Laschen (25) fest verbunden sind.

4. Rohrkupplung nach einem der vorhergehenden Ansprüche, **dadurch gekennzeichnet, dass** die Laschen (5, 35) als separate Teile ausgebildet und mit dem Gehäuse fest verbunden sind.

5. Rohrkupplung nach Anspruch 4, **dadurch gekennzeichnet, dass** die Materialstärke des Mantels (2, 29) und der Laschen (5, 35) unterschiedlich ist.

6. Rohrkupplung nach einem der vorhergehenden Ansprüche, **dadurch gekennzeichnet, dass** die Laschen (25) mit dem Mantel (22) einstückig ausgebildet sind.

7. Rohrkupplung nach einem der vorhergehenden Ansprüche, **dadurch gekennzeichnet, dass** die Zunge (3, 30, 31) mit dem Gehäuse einstückig ausgebildet ist.

8. Rohrkupplung nach Anspruch 7, **dadurch gekennzeichnet, dass** mehrere in axialer Richtung nebeneinander angeordnete, sich in Umfangsrichtung erstreckende Zungen (30, 31) vorgesehen sind.

9. Rohrkupplung nach Anspruch 7 oder 8, **dadurch gekennzeichnet, dass** die einzelnen Zungen (30, 31) durch vorzugsweise V-förmige Einschnitte (33) gebildet werden.

10. Rohrkupplung nach einem der vorhergehenden Ansprüche, **dadurch gekennzeichnet, dass** sich die Seitenwände (32) wenigstens teilweise bis in den Bereich der Zunge (31) erstrecken.

11. Rohrkupplung nach einem der vorhergehenden Ansprüche, **dadurch gekennzeichnet, dass** die äusseren Zungen (31) in axialer Richtung verformbar sind.

## Claims

1. Pipe coupling comprising a substantially cylindrical housing (1, 21, 28), preferably consisting of metallic material, which has a longitudinal slot (2a, 19, 27, 36) and, on both end sides, radially inwardly directed side walls (4, 24, 32) and which can be constricted in diameter by means of a clamping device, said housing further having a tongue (3, 30, 31), that bridges the longitudinal slot (2a, 19, 27, 36), and at least one sealing element (9), preferably made of elastomeric material, disposed in the said housing, wherein the clamping device consists of brackets (5, 25, 35) bent over against the edges of the longitudinal slot (2a, 19, 27, 36), bolts (6) supported against the said brackets, and screws (7) passing transversely through the bolts (6), and the clamping device has supports for the side walls (4, 24, 32), the supports (10, 26, 34) being disposed or configured against the brackets (5, 25, 35), **characterized in that** the two side walls (4, 24, 32) are directed radially inwards, the brackets (5, 25, 35) and the supports (10, 26, 34) protrude over the housing (1, 21, 28) in the axial direction of the coupling and the supports (10, 26, 34) are configured as projections (10, 26, 34), against which the side walls (4, 24, 32) are axially supported.

2. Pipe coupling according to Claim 1, **characterized in that** the supports are integrally connected to the brackets (5, 35).

3. Pipe coupling according to one of the preceding claims, **characterized in that** the supports are configured as separate elements (26) and are fixedly connected to the brackets (25).

4. Pipe coupling according to one of the preceding claims, **characterized in that** the brackets (5, 35) are configured as separate parts and are fixedly connected to the housing.

5. Pipe coupling according to Claim 4, **characterized in that** the material thickness of the casing (2, 29) and of the brackets (5, 35) is different.

6. Pipe coupling according to one of the preceding claims, **characterized in that** the brackets (25) are configured integrally with the casing (22).

7. Pipe coupling according to one of the preceding claims, **characterized in that** the tongue (3, 30, 31) is configured integrally with the housing.

8. Pipe coupling according to Claim 7, **characterized in that** a plurality of tongues (30, 31) are provided, which are arranged side by side in the axial direction and extend in the peripheral direction.

9. Pipe coupling according to Claim 7 or 8, **characterized in that** the individual tongues (30, 31) are formed by preferably V-shaped notches (33).

10. Pipe coupling according to one of the preceding claims, **characterized in that** the side walls (32) extend at least partially into the region of the tongue (31).

11. Pipe coupling according to one of the preceding claims, **characterized in that** the outer tongues (31) are deformable in the axial direction.

## Revendications

1. Raccord de tuyau comprenant un boîtier (1, 21, 28) essentiellement cylindrique présentant une fente longitudinale (2a, 19, 27, 36) et des parois latérales (4, 24, 32) orientées vers l'intérieur des deux côté frontaux, dont le diamètre peut être rétréci au moyen d'un dispositif de serrage, de préférence constitué d'un matériau métallique, comprenant une langue (3, 30, 31) surmontant la fente longitudinale (2a, 19, 27, 36), et au moins un élément d'étanchéité (9) disposé dans celui-ci, de préférence en matériau élastomère, le dispositif de serrage se composant de pattes (5, 25, 35) repliées aux bords de la fente longitudinale (2a, 19, 27, 36), de boulons (6) s'appuyant sur celles-ci et de vis (7) traversant transversalement les boulons (6), et le dispositif de serrage présentant des supports pour les parois latérales (4, 24, 32), les supports (10, 26, 34) étant disposés ou réalisés sur les pattes (5, 25, 35), **caractérisé en ce que** les deux parois latérales (4, 24, 32) sont orientées radialement vers l'intérieur, les pattes (5, 25, 35), respectivement les supports (10, 26, 34) dépassant au-delà du boîtier (1, 21, 28) dans la direction axiale du raccord et les supports (10, 26, 34) étant réalisés sous forme de saillies (10, 26, 34) contre lesquelles les parois latérales (4, 24, 32) s'appuient axialement.

2. Raccord de tuyau selon la revendication 1, **caractérisé en ce que** les supports sont connectés d'une seule pièce aux pattes (5, 35).

3. Raccord de tuyau selon l'une quelconque des revendications précédentes, **caractérisé en ce que** les supports sont réalisés sous forme d'éléments séparés (26) et sont connectés fixement aux pattes (25).

4. Raccord de tuyau selon l'une quelconque des revendications précédentes, **caractérisé en ce que** les pattes (5, 35) sont réalisées sous forme de pièces séparées et sont connectées fixement au boîtier.

5. Raccord de tuyau selon la revendication 4, **caractérisé en ce que** l'épaisseur de matériau de l'enveloppe (2, 29) et des pattes (5, 35) est différente.

6. Raccord de tuyau selon l'une quelconque des revendications précédentes, **caractérisé en ce que** les pattes (25) sont réalisées d'une seule pièce avec l'enveloppe (22).

7. Raccord de tuyau selon l'une quelconque des revendications précédentes, **caractérisé en ce que** la langue (3, 30, 31) est réalisée d'une seule pièce avec le boîtier.

8. Raccord de tuyau selon la revendication 7, **caractérisé en ce que** l'on prévoit plusieurs langues (30, 31) juxtaposées dans la direction axiale, s'étendant dans la direction périphérique.

9. Raccord de tuyau selon la revendication 7 ou 8, **caractérisé en ce que** les langues individuelles (30, 31) sont formées par des entailles (33) de préférence en forme de V.

10. Raccord de tuyau selon l'une quelconque des revendications précédentes, **caractérisé en ce que** les parois latérales (32) s'étendent au moins en partie jusque dans la région de la langue (31).

11. Raccord de tuyau selon l'une quelconque des revendications précédentes, **caractérisé en ce que** les langues extérieures (31) sont déformables dans la direction axiale.
